# EUROPEAN PATENT SPECIFICATION

(11) **EP 3 862 729 B1**
(45) Date of publication and mention of the grant of the patent: **20.09.2023**
(21) Application number: 21153176.9
(22) Date of filing: 25.01.2021
(51) Int. Cl.: G01F 15/00

(54) **A DEVICE FOR DETECTING OR MEASURING A QUANTITY ASSOCIATED WITH A FLUID FLOW**
VORRICHTUNG ZUR DETEKTION ODER MESSUNG EINER MIT EINEM FLUIDSTROM ASSOZIIERTEN MENGE
DISPOSITIF POUR DÉTECTER OU MESURER UNE QUANTITÉ ASSOCIÉE À UN ÉCOULEMENT DE FLUIDE

(30) Priority: 04.02.2020 SE 2050115
(43) Date of publication of application: 11.08.2021
(73) Proprietor: TT Thermotech Scandinavia AB, 901 31 Umeå (SE)
(72) Inventor: MAKAROV, Kirill, 904 21 Umeå (SE)
(74) Representative: Ehrner & Delmar Patentbyrå AB

(56) References cited:
- US-A1- 2016 313 141
- US-A1- 2019 271 403

## Description

### Technical Field

Aspects of the present invention relate to a device for detecting or measuring a variable quantity associated with a fluid flow. Aspects of the present invention also relate to an arrangement comprising a device of the above-mentioned sort. Aspects of the present invention also relate to a heat exchange fluid system.

### Background

In general, actuators, such as thermostats, may be connected to liquid fluid systems and to radiators of liquid fluid systems, such as in connection with valves, in order to regulate the fluid flow.

Fluid control devices are generally known in the art, see for example US 2019.271.403 A1 or US 2016.313.141 A1.

### Summary

The inventor of the present invention has found that it may be desirable to subsequently mount a sensor to an already installed fluid system, i.e. to perform a post-installation mounting of a sensor to an already installed fluid system. The inventor of the invention has found that it may be complex to install or mount a sensor to an already installed fluid system.

An object of the invention is to provide a solution which mitigates or solves the drawbacks and problems of conventional solutions.

The above and further objects are solved by the subject matter of the independent claim. Further advantageous embodiments of the invention can be found in the dependent claims.

According to a first aspect of the invention, the above-mentioned and other objects are achieved with an arrangement according to claim 1.

An advantage of embodiments of the arrangement according to the first aspect is that a flexible mounting of a sensor to a fluid system, a valve unit and an actuator is provided. Since the device is equipped with attachment portions for attachment to both the valve unit and the actuator, an easy mounting of a sensor is provided. Especially an easy subsequent mounting of a sensor is provided, i.e. a mounting to an existing actuator which is already installed and attached to the valve unit. Instead of acquiring and mounting a new sophisticated actuator with integrated sensors, the use of the old actuator can continue but now with an applied sensor as a result of the arrangement according to the first aspect. An advantage of embodiments of the arrangement according to the first aspect is that sensors can be applied in an economically advantageous manner since new and expensive sophisticated actuators do not have to be acquired. An advantage of the arrangement according to the first aspect is that the mounting and dismantling of a sensor to/from a fluid system, such as to/from a valve unit included in a fluid system, is improved and facilitated. The fluid flow may be a liquid flow or a gas flow. The liquid may be water, but other liquids are possible. For some embodiments, it may be defined that the arrangement is configured for post-installation mounting to the valve unit and to the actuator. As disclosed by the claimed invention, the actuator comprises a thermostat.

According to an advantageous embodiment of the arrangement according to the first aspect, the first attachment portion of the device is configured for detachable attachment to the attachment portion of the valve unit. An advantage of this embodiment is that the mounting and dismantling of a sensor to/from a valve unit included in a fluid system is further improved and facilitated.

According to a further advantageous embodiment of the arrangement according to the first aspect, the second attachment portion of the device is configured for detachable attachment to the attachment portion of the actuator. An advantage of this embodiment is that the mounting and dismantling of a sensor to/from a valve unit included in a fluid system is further improved and facilitated.

According to yet another advantageous embodiment of the arrangement according to the first aspect, the device comprises a housing provided with the first and second attachment portions of the device. An advantage of this embodiment is that the mounting of a sensor to an actuator and/or a valve unit included in a fluid system is further improved and facilitated.

According to an advantageous embodiment of the arrangement according to the first aspect, the housing of the device houses the at least one sensor. An advantage of this embodiment is that the mounting of a sensor to an actuator and/or a valve unit included in a fluid system is further improved and facilitated.

According to a further advantageous embodiment of the arrangement according to the first aspect, the device comprises a movable member movable in relation to the housing of the device,
wherein the movable member is configured for contact with the valve unit, and
wherein the at least one sensor comprises a position sensor for detecting or measuring the position of the movable member in relation to the housing of the device.

An advantage of this embodiment is that the mounting of a position sensor, which is in contact with the valve unit, to an actuator and/or a valve unit included in a fluid system is improved and facilitated.

According to yet another advantageous embodiment of the arrangement according to the first aspect, the position sensor comprises any one of the group of:
- an inductive sensor/detector;
- a magnetic field sensor;
- a Hall-effect sensor; and
- a capacitive sensor/detector.

According to yet another advantageous embodiment of the arrangement according to the first aspect, the position sensor comprises a first sensor element and a second sensor element,
wherein the first sensor element is attached to one of the movable member and the housing of the device while the second sensor element is attached to the other one of the movable member and the housing of the device, and
wherein the first sensor element and the second sensor element are movable in relation to one another.

An advantage of this embodiment is that the mounting of a position sensor to an actuator and/or a valve unit included in a fluid system is improved and facilitated.

According to a further advantageous embodiment of the arrangement according to the first aspect, the first attachment portion of the device is configured for engagement with and attachment to the attachment portion of the valve unit which comprises a valve spindle and a valve housing,
wherein the valve spindle is movable in relation to the valve housing in order to control the fluid flow through the valve housing, and
wherein the movable member of the device is connectable to the valve spindle for the determination or detection of the position of the valve spindle in relation to the valve housing by way of the position sensor.

An advantage of this embodiment is that the mounting of a position sensor to an actuator and/or a valve unit for measuring or determining the position of the valve spindle is improved and facilitated.

According to still another advantageous embodiment of the arrangement according to the first aspect, the movable member of the device comprises a pin,
wherein the movable member is configured to position the pin in alignment with the valve spindle.

An advantage of this embodiment is that the mounting of a position sensor to an actuator and/or a valve unit for measuring or determining the position of the valve spindle is further improved and facilitated.

According to an advantageous embodiment of the arrangement according to the first aspect, the housing of the device comprises a recess in alignment with the pin,
wherein the pin is connectable to a movable element of the actuator, and
wherein the movable element of the actuator is movable in relation to the remaining part of the actuator.

An advantage of this embodiment is that the mounting of a position sensor to a valve unit and an actuator for measuring or determining the position of the valve spindle is further improved and facilitated.

According to a further advantageous embodiment of the arrangement according to the first aspect, the at least one sensor comprises at least one of a temperature sensor for detecting or measuring the temperature of the fluid flow and a velocity sensor for detecting or measuring the velocity of the fluid flow. An advantage of this embodiment is that the mounting of a sensor to a valve unit included in a fluid system is further improved and facilitated.

According to an advantageous embodiment of the arrangement according to the first aspect, one or more of the first attachment portion and the second attachment portion of the device is/are configured for attachment by way of one or more of the group of:
- a thread attachment;
- a friction attachment;
- a positive locking attachment;
- a bayonet attachment;
- a snap-on attachment; and
- a snap-in attachment.

According to a second aspect of the invention, the above mentioned and other objects are achieved with a heat exchange fluid system comprising
- at least one arrangement according to any one of the embodiments mentioned above or below; and
- the valve unit.

Advantages of embodiments of the heat exchange fluid system according to the second aspect correspond to advantages mentioned above in connection with the arrangement according to the first aspect.

The above-mentiones embodiments of the arrangement and the heat exchange fluid system according to the aspects of the invention may be combined in various possible ways and thus provide further advantageous embodiments.

Further advantageous embodiments of the arrangement and the heat exchange fluid system according to the aspects of the invention and further advantages of the embodiments according to the aspects of the invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Fig. 1: is a schematic exploded cutaway side view of a first embodiment of the device ;
- Fig. 2: is a schematic cutaway side view of the device of Fig. 1 in an assembled state;
- Fig. 3: is a schematic cutaway side view of the device of Fig. 2, wherein a component of the device is located in a different position in relation to another component of the device;
- Fig. 4: is a schematic exploded cutaway side view of a second embodiment of the device;
- Fig. 5: is a schematic cutaway side view of the device of Fig. 4 in an assembled state;
- Fig. 6: is a schematic exploded cutaway side view of a third embodiment of the device;
- Fig. 7: is a schematic cutaway side view of the device of Fig. 6 in an assembled state;
- Fig. 8: is a schematic exploded cutaway side view of a fourth embodiment of the device;
- Fig. 9: is a schematic cutaway side view of the device of Fig. 8 in an assembled state; and
- Fig. 10: is a schematic perspective view of embodiments of the arrangement according to the claimed invention and the heat exchange fluid system according to another aspect, wherein an embodiment of the arrangement with the device mounted to the valve unit and to the actuator.

### Detailed Description

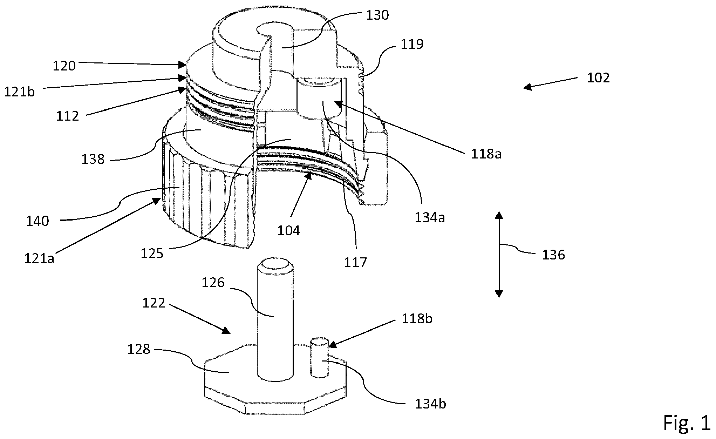

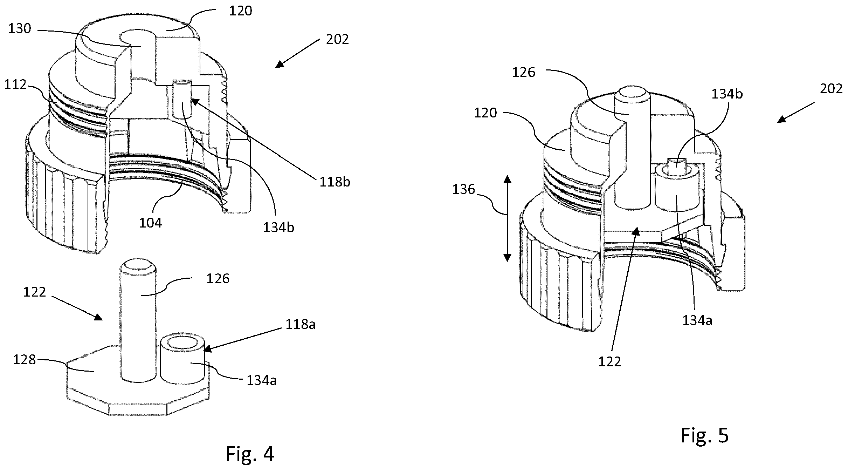

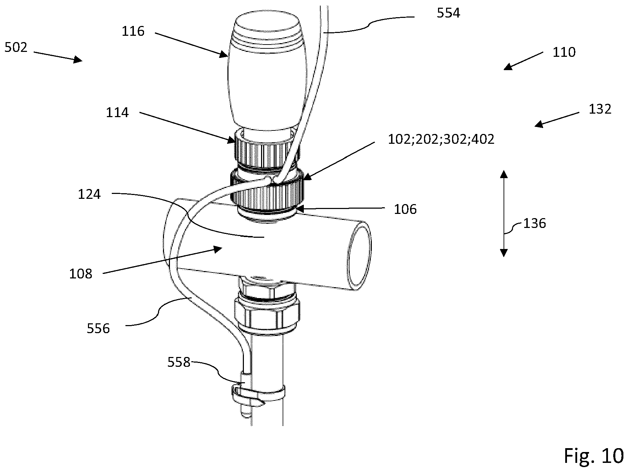

With reference to Figs. 1 to 3, which show a first embodiment of the device 102 according to the first aspect, a device 102 for detecting and/or measuring a variable quantity associated with a fluid flow is schematically illustrated. The device 102 in Figs. 1 to 3 is illustrated in a cutaway manner, where a part of the device 102 has been removed to better illustrate the device 102 (which also apply to the embodiments in Figs. 4 to 9). It is to be understood that when using the device 102 the removed part is not removed. The variable quantity may also be called a varying quantity. The fluid may be a liquid or a gas, i.e. the fluid flow may be a liquid flow or a gas flow. The liquid may, for example, be water, but other liquids are possible. The variable quantity associated with a fluid flow may be the opening degree or the size of the opening or the opening area of a valve unit 108 (see Fig. 10) of a fluid system 110, the temperature of the fluid flow, the velocity of the fluid flow etc. Other variable quantities are also possible. The valve unit 108 may be configured to control or regulate the fluid flow.

With reference to Fig. 1, the device 102 comprises a first attachment portion 104.

The first attachment portion 104 is configured for engagement with an attachment portion 106 of a valve unit 108 (See Fig. 10). The first attachment portion 104 is configured for attachment to an attachment portion 106 of a valve unit 108 (See Fig. 10). The valve unit 108 is included in a fluid system 110 (see Fig. 10). The valve unit 108 is configured to control the fluid flow. The device 102 comprises a second attachment portion 112. The second attachment portion 112 is configured for engagement with an attachment portion 114 of an actuator 116 (see Fig. 10). The second attachment portion 112 is configured for attachment to an attachment portion 114 of an actuator 116 (see Fig. 10). With reference to Figs. 1 to 3, the device 102 comprises at least one sensor 118a, 118b for detecting and/or measuring the variable quantity. The actuator 116 comprises a thermostat.

For some embodiments, it may be defined that the device 102 is configured for post-installation mounting to the valve unit 108 and to the actuator 116. For some embodiments, it may be defined that the device 102 is configured for mounting to an already installed valve unit 108 and to an already installed actuator 116. For some embodiments, it may be defined that the first attachment portion 104 is configured for engagement with and attachment to an attachment portion 106 of a valve unit 108 already having said/its attachment portion 106. Thus, for some embodiments, the valve unit 108 does not have to be provided with any new attachment portion before the attachment to the device 102 and to the first attachment portion 104 of the device 102. For some embodiments, it may be defined that the second attachment portion 112 is configured for engagement with and attachment to an attachment portion 114 of an actuator 116 already having said/its attachment portion 114. Thus, for some embodiments, the actuator 116 does not have to be provided with any new attachment portion before the attachment to the device 102 and to the second attachment portion 112 of the device 102. For some embodiments, it may be defined that the device 102 is configured to be located between the valve unit 108 and the actuator 116 when installed or mounted. For some embodiments, it may be defined that the device 102 is configured for installation between the valve unit 108 and the actuator 116. For some embodiments, the device 102 may be described as an intermediate unit, or may be described to comprise an intermediate unit, which is configured to be intermediate in relation to the valve unit 108 and the actuator 116, for example when installed or mounted.

The first attachment portion 104 of the device 102 may be configured for detachable, or releasable, attachment to the attachment portion 106 of the valve unit 108. For this embodiment, it may be described that the first attachment portion 104 of the device 102 is detachable from the attachment portion 106 of the valve unit 108 without damaging the valve unit 108 or the attachment portion 106 of the valve unit 108. The second attachment portion 112 of the device 102 may be configured for detachable, or releasable, attachment to the attachment portion 114 of the actuator 116. For this embodiment, it may be described that the second attachment portion 112 of the device 102 is detachable from the attachment portion 114 of the actuator 116 without damaging the actuator 116 or the attachment portion 114 of the actuator 116.

For some embodiments, one or more of the first attachment portion 104 of the device 102 and the second attachment portion 112 of the device 102, for example both of the first attachment portion 104 and the second attachment portion 112, may be configured for attachment by way of one or more of the group of:
- a thread attachment;
- a friction attachment;
- a positive locking attachment;
- a bayonet attachment;
- a snap-on attachment; and
- a snap-in attachment.

Any one of the attachments mentioned above may alternatively or instead be referred to as a joint, a connection, or a coupling.

With reference to Figs. 1 to 3, for some embodiments, the first attachment portion 104 of the device 102 may comprise at least one thread 117, for example at least one internal thread 117, configured for engagement with at least one thread, for example at least one external thread, of the attachment portion 106 of the valve unit 108. The second attachment portion 112 of the device 102 may comprise at least one thread 119, for example at least one external thread 119, configured for engagement with at least one thread, for example at least one internal thread, of the attachment portion 114 of the actuator 116. However, it is to be understood that other alternative sorts of mechanical attachments or joints are possible, such as bayonet attachments, or friction attachments, or any one of the attachments mentioned above, instead of threads 117, 119.

With reference to Figs. 1 to 3, for some embodiments, the device 102 may comprise a housing 120 provided with the first attachment portion 104 and the second attachment portion 112 of the device 102. The housing 120 may be made of a polymer material. However, other materials are possible. The housing 120 may be jar-shaped or cup-shaped. The housing 120 of the device 102 may be configured to house the at least one sensor 118a, 118b. The first attachment portion 104 of the device 102 may be disclosed to be located at a first end portion 121a of the housing 120 of the device 102 while the second attachment portion 112 of the device 102 may be disclosed to be located at a second end portion of the housing 120 of the device 102.

With reference to Figs. 1 to 3, for some embodiments, the device 102 may comprise a movable member 122 movable in relation to the housing 120 of the device 102. The movable member 122 and the housing 120 may comprise a guide for guiding the movement of the movable member 122 or for guiding the movable member 122 in relation to the housing 120. The movable member 122 is configured for contact with, or connection or coupling to, the valve unit 108. The at least one sensor 118a, 118b may comprise a position sensor 118a, 118b for detecting and/or measuring the position of the movable member 122 in relation to the housing 120 of the device 102. The position sensor 118a, 118b may comprise any one of the group of: an inductive sensor/detector; a magnetic field sensor; a Hall-effect sensor; and a capacitive sensor/detector. The movable member 122 may be made of a polymer material, but other materials are possible. The movable member 122 may at least partly, or to a large extent, be housed in the housing 120, such as in an internal space 125, or an internal compartment, of the housing 120.

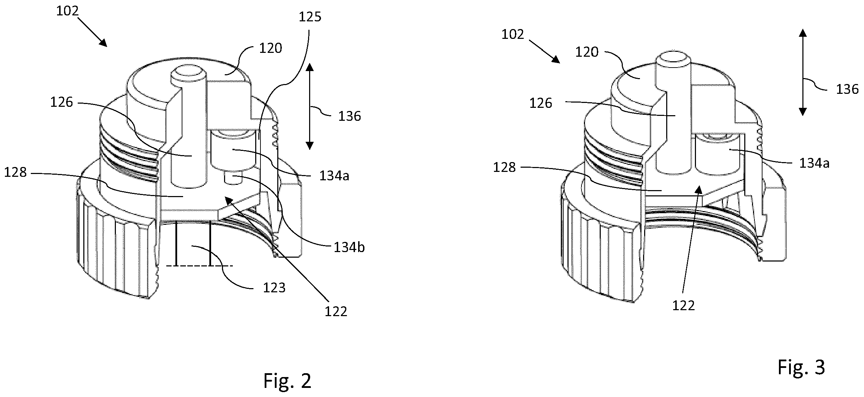

With reference to Figs. 1 to 3 and 4, for some embodiments, the first attachment portion 104 of the device 102 may be configured for engagement with and attachment to an attachment portion 106 of a valve unit 108 which comprises a valve spindle 123 (see Fig. 2) and a valve housing 124 (see Fig. 10). The valve spindle 123 is movable in relation to the valve housing 124 in order to control the fluid flow through the valve housing 124. The movable member 122 of the device 102 may be connectable or mountable to the valve spindle 123, for example, for the determination and/or detection of the position of the valve spindle 123 in relation to the valve housing 124 by way of the position sensor 118a, 118b, for embodiments including a position sensor 118a, 118b. Thus, the position sensor 118a, 118b,which detects or measures the position of the movable member 122 in relation to the housing 120 of the device 102, may be configured to determine, detect, or measure the position of the valve spindle 123 in relation to the valve housing 124.

With reference to Figs. 1 to 3, for some embodiments, the movable member 122 of the device 102 may comprise a pin 126. The movable member 122 of the device 102 may comprise a plate 128, to which the pin 126 is attached. The pin 126 may be attached to the plate 128 in different ways, such as glue, positive locking, or other mechanical attachments or joints. The pin 126 and the plate 128 may also be formed or moulded in one piece. The movable member 122 is advantageously configured to position the pin 126 in alignment with the valve spindle 123, i.e. such that the pin 126 and the valve spindle 123 have a substantially common longitudinal axis. For some embodiments, the pin 126 may be cylindrical, for example having a substantially circular cross-section. However, for other embodiments, the pin 126 may have other cross-section, such as rectangular, oval, or other shapes.

With reference to Figs. 1 to 3, for some embodiments, the housing 120 of the device 102 comprises, or defines, a recess 130 in alignment with the pin 126. In some embodiments, the recess 130 may be a through-hole, this is not necessary. The pin 126 may be connectable to a movable element of the actuator 116. The movable element of the actuator 116 is movable in relation to the remaining part of the actuator 116. The recess 130 of the housing 120 may be complementary to the pin 126. The housing 120 may be configured such that the pin 126 is received in the recess 130 in the assembled state of the device 102. The recess 130 of the housing 120 and the pin 126 of the movable member 122 may form the above-mentioned guide for guiding the movement of the movable member 122 or for guiding the movable member 122 in relation to the housing 120. However, alternative guides for guiding the movement of the movable member 122 or for guiding the movable member 122 in relation to the housing 120 are possible.

The first attachment portion 104 of the device may be configured for attachment to an attachment portion 106 of a valve unit 108 included in a heat exchange fluid system 132 (see Fig. 10).

With reference to Figs. 1 to 3, the position sensor 118a, 118b may comprise a first sensor element 118a and a second sensor element 118b. In the shown embodiment, the first sensor element 118a is attached to one 120, 122 of the movable member 122 and the housing 120 of the device 102 while the second sensor element 118b is attached to the other one 120, 122 of the movable member 122 and the housing 120 of the device 102. The first sensor element 118a and the second sensor element 118b are movable in relation to one another. In the shown embodiment of Figs. 1 to 3, the first sensor element 118a is attached to the housing 120 while the second sensor element 118b is attached to the movable member 122, for example attached to the plate 128 of the movable member 122. The first sensor element 118a may comprise a coil 134a, or a winding, made of an electrically conductive material. The second sensor element 118b may comprise a ferromagnetic core 134b. The core 134b may be configured to be surrounded by the coil 134a, but this is not a requirement. When the coil 134a and the ferromagnetic core 134b are moved in relation to one another in a direction of movement 136, the inductance is changed, and thereby the position of the movable member 122 in relation to the housing 120 can be determined or measured, and thereby the position of the valve spindle 123 in relation to the valve housing 124 can be determined or measured. In the embodiment shown in Figs. 1 to 3, the coil 134a is thus fixed in relation to the housing 120 while the ferromagnetic core 134b is fixed in relation to the movable member 122. The ferromagnetic core 134b may be cylindrical, for example circular cylindrical. The coil 134a may be annular. The coil 134a may be cylindrical, for example circular cylindrical, and a cylindrical space, for example circular cylindrical, may be formed by the coil 134a. In alternative embodiments, when the position sensor comprises a magnetic field sensor, the first sensor element may comprise a magnet while the second sensor element may comprise a magnetic field detector.

With reference to Figs. 2 and 3, the guide of the device 102, which may be formed by the recess 130 of the housing 120 and the pin 126 of the movable member 122, for guiding the movement of the movable member 122 or for guiding the movable member 122 in relation to the housing 120, may be configured to guide the movable member 122 in the direction of movement 136 between a first position, which is shown in Fig. 2, and a second position, which is shown in Fig. 3. The first position (Fig. 2) may be referred to as a bottom position. The second position (Fig. 3) may be referred to as a top position. For some embodiments, when the device 102 is mounted to the valve unit 108 and to the actuator 116, the valve spindle 123 is in a bottom position in relation to the valve housing when the movable member 122 is in the first position (Fig. 2), wherein the valve spindle 123 blocks the opening of the valve housing 124 to the largest extent. For some embodiments, when the device 102 is mounted to the valve unit 108 and to the actuator 116, the valve spindle 123 is in a top position in relation to the valve housing when the movable member 122 is in the second position (Fig. 3), wherein the opening of the valve housing 124, which in other circumstances is restricted by the valve spindle 123, is open to the largest extent.

With reference to Figs. 1 to 3, in the shown embodiment, the movable member 122 is configured to transfer, or convey, the movement of the movable element of the actuator 116 to the movable valve spindle 123 of the valve unit 108.

With reference to Fig. 1, the housing 120 of the device 102 has an outside 138. The outside 138 of the housing 120 of the device 102 may be provided with a peripherical grip 140 for facilitating the mounting, for example the screwing, of the device 102 and/or the housing 120 to the valve housing 124.

In Figs. 4 and 5, a second embodiment of the device 202 according to the first aspect is schematically illustrated. The difference between the first embodiment of the device 102 shown in Figs. 1 to 3 and the second embodiment of the device 202 shown in Figs. 4 and 5 is that the first sensor element 118a and the second sensor element 118b have switched places. In the shown second embodiment in Figs. 4 and 5, the first sensor element 118a is thus attached to the movable member 122 while the second sensor element 118b is attached to the housing 120. As mentioned above, the first sensor element 118a may comprise a coil 134a made of an electrically conductive material. As mentioned above, the second sensor element 118b may comprise a ferromagnetic core 134b, the core 134b being configured to be surrounded by the coil 134a (see Fig. 5). Otherwise, the second embodiment of the device 202 shown in Figs. 4 and 5 may comprise the same features as the first embodiment of the device 102 shown in Figs. 1 to 3, and therefore, these features are not disclosed in detail here to avoid repetition.

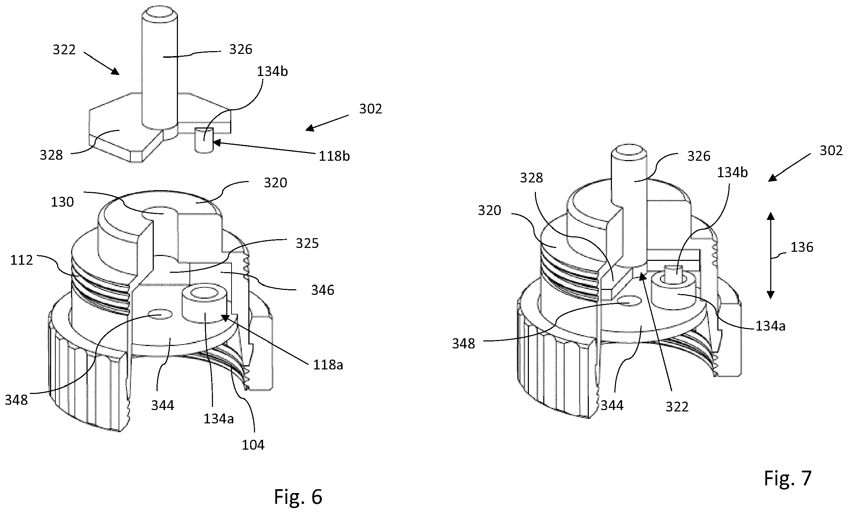

With reference to Figs. 6 and 7, a third embodiment of the device 302 according to the first aspect is schematically illustrated. Compared to the first embodiment of the device 102 shown in Figs. 1 to 3, the device 302 in Figs. 6 and 7 has a modified movable member 322, which may include a pin 326 and a plate 328, and a housing 320 having a modified internal space 325, or modified internal compartment. The device 302 of Figs. 6 and 7 comprises a housing plate 344 attached to the housing 320, for example to an inside 346 of the housing 320. The housing plate 344 may be attached to the housing 320 in different ways, for example by snap-in functionality, glue or by an annular recess. In the shown embodiment of Figs. 6 and 7, the first sensor element 118a is attached to the housing 320, for example to the housing plate 344 of the housing 320 while the second sensor element 118b is attached to the movable member 322, for example attached to the plate 328 of the movable member 322. As mentioned above, the first sensor element 118a may comprise a coil 134a made of an electrically conductive material. As mentioned above, the second sensor element 118b may comprise a ferromagnetic core 134b, the core being configured to be surrounded by the coil 134a (see Fig. 7). The housing plate 344 may include or define a plate opening 348, or through-hole, which may receive at least one part of the valve spindle 123 of the valve unit 108 when the device 302 is mounted to the valve unit 108, whereby the movable member 322 of the device 302 may be connectable or mountable to the valve spindle 123. Otherwise, the third embodiment of the device 302 shown in Figs. 6 and 7 may comprise the same features as the first embodiment of the device 102 shown in Figs. 1 to 3, and therefore, these features are not disclosed in further detail again to avoid repetition.

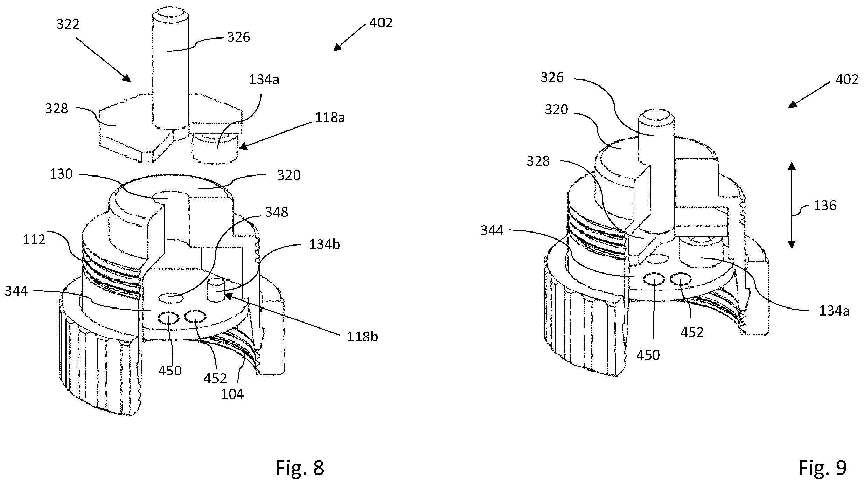

In Figs. 8 and 9, a fourth embodiment of the device 402 according to the first aspect is schematically illustrated. The difference between the third embodiment of the device 302 shown in Figs. 6 to 7 and the fourth embodiment of the device 402 shown in Figs. 8 and 9 is that the first sensor element 118a and the second sensor element 118b have switched places. In the shown fourth embodiment in Figs. 8 and 9, the first sensor element 118a is thus attached to the movable member 322 while the second sensor element 118b is attached to the housing 320. As mentioned above, the first sensor element 118a may comprise a coil 134a made of an electrically conductive material. As mentioned above, the second sensor element 118b may comprise a ferromagnetic core 134b, the core 134b being configured to be surrounded by the coil 134a (see Fig. 9). Further, the device 402 may include at least one temperature sensor 450 for detecting and/or measuring the temperature of the fluid flow. The device 402 may include at least one velocity sensor 452 for detecting and/or measuring the velocity of the fluid flow. The temperature sensor 450 and the velocity sensor 452 are schematically illustrated in Figs. 8 and 9. Otherwise, the fourth embodiment of the device 402 shown in Figs. 8 and 9 may comprise the same features as the third embodiment of the device 302 shown in Figs. 6 and 7, and therefore, these features are not disclosed in further detail here to avoid repetition.

With reference to Fig. 10, embodiments of the arrangement 502 according to the first aspect and the heat exchange fluid system 132 according to the second aspect are shown, wherein an embodiment of the device 102, 202, 302, 402 is mounted to a valve unit 108 and to an actuator 116. The arrangement 502 comprises at least one actuator 116 and at least one device 102, 202, 302, 402 according to any one of the embodiments disclosed above. The arrangement 502 may comprise at least one valve unit 108 included in a fluid system 110, such as a heat exchange fluid system 132. The heat exchange fluid system 132 comprises at least one arrangement 502 according to any one of the embodiments disclosed above and/or at least one device 102, 202, 302, 402 according to any one of the embodiments disclosed above. For example, the heat exchange fluid system 132 may comprise floor heating, such as liquid floor heating. The device 102, 202, 302, 402 may be configured to communicate via wireless communication with at least one external unit, such as a computer or computer unit. The device 102, 202, 302, 402 may be configured to communicate via wires 554, 556, or lines, with at least one external unit, such as a computer, a sensor unit etc. The wires 554, 556 may, for example, be configured to convey or transmit electrical signals or optical signals. For example, the device 102, 202, 302, 402 may be connectable to an external sensor unit 558, such as a temperature sensor, via a wire 556, or a line. For example, the device 102, 202, 302, 402 may be connectable to an external computer/control unit via the wire 554, or line.

The present invention shall not be considered limited to the embodiments illustrated above. Instead, the present invention relates to, and encompasses all different embodiments being included within the scope of the appended independent claim.

## Claims

1. An arrangement (502) comprising at least one actuator (116) and at least one device (102; 202; 302; 402) for detecting or measuring a variable quantity associated with a fluid flow,
wherein the at least one actuator (116) comprises a thermostat,
wherein the at least one device (102; 202; 302; 402) comprises a first attachment portion (104) configured for engagement with and attachment to an attachment portion (106) of a valve unit (108) included in a fluid system (110), preferably the fluid system (110) is a heat exchange fluid system (132), the valve unit (108) being configured to control the fluid flow,
wherein the at least one device (102; 202; 302; 402) further comprises a second attachment portion (112) configured for engagement with and attachment to an attachment portion (114) of the at least one actuator (116), and
at least one sensor (118a, 118b, 450, 452) for detecting or measuring the variable quantity.

2. The arrangement (502) according to claim 1, **characterized in that** the first attachment portion (104) of the device (102; 202; 302; 402) is configured for detachable attachment to the attachment portion (106) of the valve unit (108).

3. The arrangement (502) according to claim 1 or 2, **characterized in that** the second attachment portion (112) of the device (102; 202; 302; 402) is configured for detachable attachment to the attachment portion (114) of the actuator (116).

4. The arrangement (502) according to any one of the claims 1 to 3, **characterized in that** the device (102; 202; 302; 402) comprises a housing (120; 320) provided with the first and second attachment portions (104, 112) of the device (102; 202; 302; 402).

5. The arrangement (502) according to claim 4, **characterized in that** the device (102; 202; 302; 402) comprises a movable member (122; 322) movable in relation to the housing (120; 320) of the device (102; 202; 302; 402),
wherein the movable member (122; 322) is configured for contact with the valve unit (108), and
wherein the at least one sensor (118a, 118b) comprises a position sensor (118a, 118b) for detecting or measuring the position of the movable member (122; 322) in relation to the housing (120; 320) of the device (102; 202; 302; 402).

6. The arrangement (502) according to claim 5, **characterized in that** the position sensor (118a, 118b) comprises any one of the group of:
• an inductive sensor;
• a magnetic field sensor;
• a Hall-effect sensor; and
• a capacitive sensor.

7. The arrangement (502) according to claim 5 or 6, **characterized in that** the position sensor (118a, 118b) comprises a first sensor element (118a) and a second sensor element (118b),
wherein the first sensor element (118a) is attached to one of the movable member (122; 322) and the housing (120; 320) of the device (102; 202; 302; 402) while the second sensor element (118b) is attached to the other one of the movable member (122; 322) and the housing (120; 320) of the device (102; 202; 302; 402), and
wherein the first sensor element (118a) and the second sensor element (118b) are movable in relation to one another.

8. The arrangement (502) according to any one of the claims 5 to 7, **characterized in that** the first attachment portion (104) of the device (102; 202; 302; 402) is configured for engagement with and attachment to the attachment portion (106) of the valve unit (108) which comprises a valve spindle (123) and a valve housing (124),
wherein the valve spindle (123) is movable in relation to the valve housing (124) in order to control the fluid flow through the valve housing (124), and
wherein the movable member (122; 322) of the device (102; 202; 302; 402) is connectable to the valve spindle (123) for the determination or detection of the position of the valve spindle (123) in relation to the valve housing (124) by way of the position sensor (118a, 118b).

9. The arrangement (502) according to claim 8, **characterized in that** the movable member (122; 322) of the device (102; 202; 302; 402) comprises a pin (126; 326),
wherein the movable member (122; 322) is configured to position the pin (126; 326) in alignment with the valve spindle (123).

10. The arrangement (502) according to claim 9, **characterized in that** the housing (120; 320) of the device (102; 202; 302; 402) comprises a recess (130) in alignment with the pin (126; 326),
wherein the pin (126; 326) is connectable to a movable element of the actuator (116), and
wherein the movable element of the actuator (116) is movable in relation to the remaining part of the actuator (116).

11. The arrangement (502) according to any one of the claims 1 to 10, **characterized in that** the at least one sensor (450, 452) comprises at least one of a temperature sensor (450) for detecting or measuring the temperature of the fluid flow and a velocity sensor (452) for detecting or measuring the velocity of the fluid flow.

12. The arrangement (502) according to any one of the claims 1 to 11, **characterized in that** one or more of the first attachment portion (104) and the second attachment portion (112) of the device (102; 202; 302; 402) is/are configured for attachment by way of one or more of the group of:
• a thread attachment;
• a friction attachment;
• a positive locking attachment;
• a bayonet attachment;
• a snap-on attachment; and
• a snap-in attachment.

13. A heat exchange fluid system (132) comprising:
• at least one arrangement (502) according to claims 1 to 12 and
• the valve unit (108).

## Patentansprüche

1. Anordnung (502), die mindestens einen Aktuator (116) und mindestens eine Vorrichtung (102; 202; 302; 402) zum Erfassen oder Messen einer mit einem Fluidstrom assoziierten variablen Menge umfasst,
wobei der mindestens eine Aktuator (116) einen Thermostat umfasst,
wobei die mindestens eine Vorrichtung (102; 202; 302; 402) einen ersten Befestigungsabschnitt (104) umfasst, der für den Eingriff mit und die Befestigung an einem Befestigungsabschnitt (106) einer Ventileinheit (108) in einem Fluidsystem (110) ausgelegt ist, wobei das Fluidsystem (110) vorzugsweise ein Wärmetauschfluidsystem (132) ist, wobei die Ventileinheit (108) zum Steuern des Fluidstroms ausgelegt ist,
wobei die mindestens eine Vorrichtung (102; 202; 302; 402) ferner einen zweiten Befestigungsabschnitt (112), der zum Eingriff mit und zur Befestigung an einem Befestigungsabschnitt (114) des mindestens einen Aktuators (116) ausgelegt ist, und mindestens einen Sensor (118a, 118b, 450, 452) zum Erfassen oder Messen der variablen Menge umfasst.

2. Anordnung (502) gemäß Anspruch 1, **dadurch gekennzeichnet, dass** der erste Befestigungsabschnitt (104) der Vorrichtung (102; 202; 302; 402) zur lösbaren Befestigung an dem Befestigungsabschnitt (106) der Ventileinheit (108) ausgelegt ist.

3. Anordnung (502) gemäß Anspruch 1 oder 2, **dadurch gekennzeichnet, dass** der zweite Befestigungsabschnitt (112) der Vorrichtung (102; 202; 302; 402) zur lösbaren Befestigung an dem Befestigungsabschnitt (114) des Aktuators (116) ausgelegt ist.

4. Anordnung (502) gemäß einem der Ansprüche 1 bis 3, **dadurch gekennzeichnet, dass** die Vorrichtung (102; 202; 302; 402) ein Gehäuse (120; 320) umfasst, das mit dem ersten und zweiten Befestigungsabschnitt (104, 112) der Vorrichtung (102; 202; 302; 402) versehen ist.

5. Anordnung (502) gemäß Anspruch 4, **dadurch gekennzeichnet, dass** die Vorrichtung (102; 202; 302; 402) ein bewegbares Element (122; 322) umfasst, das in Bezug auf das Gehäuse (120; 320) der Vorrichtung (102; 202; 302; 402) bewegbar ist,
wobei das bewegbare Element (122; 322) für den Kontakt mit der Ventileinheit (108) ausgelegt ist, und
wobei der mindestens eine Sensor (118a, 118b) einen Positionssensor (118a, 118b) zum Erfassen oder Messen der Position des bewegbaren Elements (122; 322) in Bezug auf das Gehäuse (120; 320) der Vorrichtung (102; 202; 302; 402) umfasst.

6. Anordnung (502) gemäß Anspruch 5, **dadurch gekennzeichnet, dass** der Positionssensor (118a, 118b) eines aus der folgenden Gruppe umfasst:
• einen induktiven Sensor;
• einen Magnetfeldsensor;
• einen Hall-Effekt-Sensor; und
• einen kapazitiven Sensor.

7. Anordnung (502) gemäß Anspruch 5 oder 6, **dadurch gekennzeichnet, dass** der Positionssensor (118a, 118b) ein erstes Sensorelement (118a) und ein zweites Sensorelement (118b) umfasst,
wobei das erste Sensorelement (118a) an einem des bewegbaren Elements (122; 322) und des Gehäuses (120; 320) der Vorrichtung (102; 202; 302; 402) angebracht ist, während das zweite Sensorelement (118b) an dem anderen des bewegbaren Elements (122; 322) und des Gehäuses (120; 320) der Vorrichtung (102; 202; 302; 402) angebracht ist, und
wobei das erste Sensorelement (118a) und das zweite Sensorelement (118b) relativ zueinander bewegbar sind.

8. Anordnung (502) gemäß einem der Ansprüche 5 bis 7, **dadurch gekennzeichnet, dass** der erste Befestigungsabschnitt (104) der Vorrichtung (102; 202; 302; 402) für den Eingriff mit und die Befestigung an dem Befestigungsabschnitt (106) der Ventileinheit (108) ausgelegt ist, die eine Ventilspindel (123) und ein Ventilgehäuse (124) umfasst,
wobei die Ventilspindel (123) in Bezug auf das Ventilgehäuse (124) bewegbar ist, um den Fluidstrom durch das Ventilgehäuse (124) zu steuern, und
wobei das bewegbare Element (122; 322) der Vorrichtung (102; 202; 302; 402) mit der Ventilspindel (123) zum Bestimmen oder Erfassen der Position der Ventilspindel (123) in Bezug auf das Ventilgehäuse (124) über den Positionssensor (118a, 118b) verbindbar ist.

9. Anordnung (502) gemäß Anspruch 8, **dadurch gekennzeichnet, dass** das bewegbare Element (122; 322) der Vorrichtung (102; 202; 302; 402) einen Stift (126; 326) umfasst,
wobei das bewegbare Element (122; 322) dazu ausgelegt ist, den Stift (126; 326) in Ausrichtung mit der Ventilspindel (123) zu positionieren.

10. Anordnung (502) gemäß Anspruch 9, **dadurch gekennzeichnet, dass** das Gehäuse (120; 320) der Vorrichtung (102; 202; 302; 402) eine mit dem Stift (126; 326) fluchtende Ausnehmung (130) umfasst,
wobei der Stift (126; 326) mit einem bewegbaren Element des Aktuators (116) verbindbar ist, und
wobei das bewegbare Element des Betätigungselements (116) in Bezug auf den übrigen Teil des Aktuators (116) bewegbar ist.

11. Anordnung (502) gemäß einem der Ansprüche 1 bis 10, **dadurch gekennzeichnet, dass** der mindestens eine Sensor (450, 452) mindestens einen Temperatursensor (450) zum Erfassen oder Messen der Temperatur des Fluidstroms und einen Geschwindigkeitssensor (452) zum Erfassen oder Messen der Geschwindigkeit des Fluidstroms umfasst.

12. Anordnung (502) gemäß einem der Ansprüche 1 bis 11, **dadurch gekennzeichnet, dass** ein oder mehrere des ersten Befestigungsabschnitts (104) und des zweiten Befestigungsabschnitts (112) der Vorrichtung (102; 202; 302; 402) zum Befestigen mittels eines oder mehreren aus der folgenden Gruppe ausgelegt sind:
• einer Schraubbefestigung;
• einer Reibungsbefestigung;
• einer formschlüssigen Befestigung;
• einer Bajonettbefestigung;
• einer Schnappbefestigung; und
• einer Einrastbefestigung.

13. Wärmetauschfluidsystem (132), umfassend:
• mindestens eine Anordnung (502) gemäß einem der Ansprüche 1 bis 12, und
• die Ventileinheit (108).

## Revendications

1. Agencement (502) comprenant au moins un actionneur (116) et au moins un dispositif (102 ; 202 ; 302 ; 402) pour détecter ou mesurer une quantité variable associée à un écoulement de fluide,
dans lequel l'au moins un actionneur (116) comprend un thermostat,
dans lequel l'au moins un dispositif (102 ; 202 ; 302 ; 402) comprend une première portion de fixation (104) configurée pour l'entrée en prise avec, et la fixation à, une portion de fixation (106) d'une unité robinet (108) incluse dans un système de fluide (110), de préférence le système de fluide (110) est un système de fluide d'échange de chaleur (132), l'unité robinet (108) étant configurée pour commander l'écoulement de fluide,
dans lequel l'au moins un dispositif (102 ; 202 ; 302 ; 402) comprend en outre une seconde portion de fixation (112) configurée pour l'entrée en prise avec, et la fixation à, une portion de fixation (114) de l'au moins un actionneur (116), au moins un capteur (118a, 118b, 450, 452) pour détecter ou mesurer la quantité variable.

2. Agencement (502) selon la revendication 1, **caractérisé en ce que** la première portion de fixation (104) du dispositif (102 ; 202 ; 302 ; 402) est configurée pour la fixation séparable à la portion de fixation (106) de l'unité robinet (108).

3. Agencement (502) selon la revendication 1 ou 2, **caractérisé en ce que** la seconde portion de fixation (112) du dispositif (102 ; 202 ; 302 ; 402) est configurée pour la fixation séparable à la portion de fixation (114) de l'actionneur (116).

4. Agencement (502) selon l'une quelconque des revendications précédentes 1 à 3, **caractérisé en ce que** le dispositif (102 ; 202 ; 302 ; 402) comprend un logement (120 ; 320) pourvu des première et seconde portions de fixation (104, 112) du dispositif (102 ; 202 ; 302 ; 402) .

5. Agencement (502) selon la revendication 4, **caractérisé en ce que** le dispositif (102 ; 202 ; 302 ; 402) comprend un organe mobile (122 ; 322) mobile par rapport au logement (120 ; 320) du dispositif (102 ; 202 ; 302 ; 402),
dans lequel l'organe mobile (122 ; 322) est configuré pour entrer en contact avec l'unité robinet (108), et
dans lequel l'au moins un capteur (118a, 118b) comprend un capteur de position (118a, 118b) pour détecter ou mesurer la position de l'organe mobile (122 ; 322) par rapport au logement (120 ; 320) du dispositif (102 ; 202 ; 302 ; 402).

6. Agencement (502) selon la revendication 5, **caractérisé en ce que** le capteur de position (118a, 118b) comprend l'un quelconque parmi le groupe de :
• un capteur inductif ;
• un capteur de champ magnétique ;
• un capteur à effet Hall ; et
• un capteur capacitif.

7. Agencement (502) selon la revendication 5 ou 6, **caractérisé en ce que** le capteur de position (118a, 118b) comprend un premier élément de capteur (118a) et un second élément de capteur (118b),
dans lequel le premier élément de capteur (118a) est fixé à un de l'organe mobile (122 ; 322) et du logement (120 ; 320) du dispositif (102 ; 202 ; 302 ; 402) alors que le second élément de capteur (118b) est fixé à l'autre de l'organe mobile (122 ; 322) et du logement (120 ; 320) du dispositif (102 ; 202 ; 302 ; 402), et
dans lequel le premier élément de capteur (118a) et le second élément de capteur (118b) sont mobiles l'un par rapport à l'autre.

8. Agencement (502) selon l'une quelconque des revendications précédentes 5 à 7, **caractérisé en ce que** la première portion de fixation (104) du dispositif (102 ; 202 ; 302 ; 402) est configurée pour l'entrée en prise avec, et la fixation à, la portion de fixation (106) de l'unité robinet (108) qui comprend une tige de robinet (123) et un logement de robinet (124),
dans lequel la tige de robinet (123) est mobile par rapport au logement de robinet (124) afin de commander l'écoulement de fluide à travers le logement de robinet (124), et
dans lequel l'organe mobile (122 ; 322) du dispositif (102 ; 202 ; 302 ; 402) peut être relié à la tige de robinet (123) pour la détermination ou détection de la position de la tige de robinet (123) par rapport au logement de robinet (124) par le biais du capteur de position (118a, 118b).

9. Agencement (502) selon la revendication 8, **caractérisé en ce que** l'organe mobile (122 ; 322) du dispositif (102 ; 202 ; 302 ; 402) comprend une goupille (126 ; 326),
dans lequel l'organe mobile (122 ; 322) est configuré pour positionner la goupille (126 ; 326) en alignement avec la tige de robinet (123).

10. Agencement (502) selon la revendication 9, **caractérisé en ce que** le logement (120 ; 320) du dispositif (102 ; 202 ; 302 ; 402) comprend un évidement (130) en alignement avec la goupille (126 ; 326),
dans lequel la goupille (126 ; 326) peut être reliée à un élément mobile de l'actionneur (116), et
dans lequel l'élément mobile de l'actionneur (116) est mobile par rapport à l'autre partie de l'actionneur (116) .

11. Agencement (502) selon l'une quelconque des revendications précédentes 1 à 10, **caractérisé en ce que** l'au moins un capteur (450, 452) comprend au moins un d'un capteur de température (450) pour détecter ou mesurer la température de l'écoulement de fluide et un capteur de vitesse (452) pour détecter ou mesurer la vitesse de l'écoulement de fluide.

12. Agencement (502) selon l'une quelconque des revendications précédentes 1 à 11, **caractérisé en ce qu'**une ou plusieurs de la première portion de fixation (104) et de la seconde portion de fixation (112) du dispositif (102 ; 202 ; 302 ; 402) est/sont configurées pour la fixation par le biais d'un ou de plusieurs parmi le groupe de :
• une fixation à filet ;
• une fixation à frottement ;
• une fixation à verrouillage positif ;
• une fixation à baïonnette ;
• une fixation à encliquetage ; et
• une fixation à enclenchement.

13. Système de fluide d'échange de chaleur (132), comprenant :
• au moins un agencement (502) selon les revendications 1 à 12, et
• l'unité robinet (108).
